# EUROPÄISCHE PATENTANMELDUNG

(11) **EP 2 316 779 A1**
(43) Veröffentlichungstag der Anmeldung: **04.05.2011**
(21) Anmeldenummer: 10186509.5
(22) Anmeldetag: 05.10.2010
(51) Int. Cl.: B66F 7/28, G01M 17/06

(54) **Hebebühne mit Achsspieltester für zweispurige Fahrzeuge**

(30) Priorität: 03.11.2009 DE 102009046358
(71) Anmelder: MAHA Maschinenbau Haldenwang GmbH & Co. KG, 87490 Haldenwang (DE)
(72) Erfinder: Seeliger, Holger, 87634 Günzach (DE)
(74) Vertreter: MERH-IP Matias Erny Reichl Hoffmann

(57) **Zusammenfassung**

Die Erfindung betrifft eine Hebebühne für zweispurige Fahrzeuge mit mindestens einem linksseitigen und einem rechtsseitigen Tragelement zur Aufnahme eines Fahrzeugrads, einem Hubelement zum Anheben und Absenken der Tragelemente und einem Achsspieltester, um ein etwaiges Achsspiel bzw. Gelenkspiel sichtbar zu machen. Der erfindungsgemäße Achsspieltester besteht aus mindestens einem Linearaktuator (13), der als Querverbindung zwischen den Tragelementen (5,6) ausgebildet ist und mit diesen endseitig in Verbindung steht zum Aufbringen einer Querkraftkomponente auf die Fahrzeugräder einer Fahrzeugsachse über das Trageelement durch die Bewegung des Linearaktuators in Querrichtung des Fahrzeugs.

## Beschreibung

Die Erfindung betrifft eine Hebebühne für zweispurige Fahrzeuge mit mindestens einem linksseitigen und einem rechtsseitigen Tragelement zur Aufnahme zumindest eines Fahrzeugrads, zumindest einem Hubelement zum Anheben und Absenken der Tragelemente und zumindest einem Achsspieltester, um ein etwaiges Achsspiel bzw. Gelenkspiel erkennbar zu machen.

Eine Hebebühne mit einer Prüfvorrichtung für zweispurige Fahrzeuge um ein etwaiges Achsspiel bzw. Gelenkspiel erkennbar zu machen ist seit langem bekannt und besteht aus einer ebenen Schiebeplatte, die beispielsweise dem rechten Vorderrad eines Kraftfahrzeugs zugeordnet ist und einer feststehenden Platte, die beispielsweise dem linken Vorderrad zugeordnet ist.

Dabei wird die ebene Schiebeplatte mit zwei geeigneten über Kreuz angeordneten hydraulischen Antriebselementen zur Durchführung einer Hin- und Herbewegung oder auch Drehbewegung der Schiebeplatte in Quer- und/ oder Längsrichtung des Fahrzeugs ausgestattet. Die Antriebselemente sind üblicherweise durch jeweilige Kolben- und Zylinderanordnungen angetrieben, die mit einem entsprechenden Druckfluid von einer elektrisch angetriebenen Pumpe und zugeordneten, in angebrachter Frequenz betätigbaren Ventilen, gespeist werden. Die Platteneinrichtungen gemäß dem Stand der Technik werden auf den jeweiligen Fahrschienen einer Hebebühne angebracht, wobei die beiden Hydraulikelemente für die Längs- und/ oder Querbewegung der Schiebeplatte unter der Schiebeplatte im Innenraum der Fahrschienen angeordnet werden.

Um das Fahrzeug auf ein etwaig vorhandenes Achsspiel zu testen, wird im Stand der Technik die ebene bewegliche Platte auf einer Seite hin- und her bewegt. Diese Bewegung überträgt sich auf beide Räder der geprüften Achse, beispielsweise der Vorderachse, und macht ein etwaiges dort vorhandenes Achsspiel bzw. eine Lagerbewegung für den Prüfer erkennbar.

Problematisch bei den bekannten Anordnungen ist die relativ große Bauhöhe aufgrund der unterhalb der Schiebeplatte angeordneten hydraulischen Antriebselemente für die Achsspielprüfung, die eine entsprechend große Tiefenabmessung der Fahrschienen einer Hebebühne erforderlich macht. Die große Tiefenabmessung der Fahrschienen erfordert einen konstruktiv aufwendigen Aufbau, erhöht die Materialkosten und schränkt den Arbeitsraum für den KFZ-Mechaniker ein. Weiterhin erschwert der Einbau der bekannten Achsspielprüfvorrichtung in die Fahrschiene die regelmäßig erforderlichen Wartungsarbeiten; beispielsweise erschwert der Einbau des Achsspieltesters in den Innenraum einer Fahrschiene das Abschmieren der Führungen mit einer Fettpresse sowie die Überprüfung der Schrauben der Führungsstangen. Zudem müssen für jeden Wartungsvorgang die Abdeckplatten bzw. die Schiebeplatten entfernt werden. Ein weitere Nachteil der aus dem Stand der Technik bekannten Anordnungen ist, dass spezielle Fahrflächen zur Aufnahme der Baugruppen für die Achsspielprüfung gefertigt, konstruiert und angepasst werden müssen.

Es ist deshalb eine Aufgabe der vorliegenden Erfindung, eine Hebebühne der eingangs genannten Art zur Verfügung zu stellen die sich durch eine geringe Bauhöhe der Achsspielprüfvorrichtung für zweispurige Fahrzeuge auszeichnet. Insbesondere ist es eine weitere Aufgabe der vorliegenden Erfindung eine Hebebühne der eingangs genannten Art zur Verfügung zu stellen, die sich durch einen besonders wartungsfreundlichen und betriebssicheren Aufbau der Achsspielprüfvorrichtung auszeichnet.

Diese Aufgabe wird durch eine Hebebühne mit einer Achsspielprüfvorrichtung gemäß den Merkmalen des Patentanspruchs 1 gelöst. Die abhängigen Patentansprüche betreffen vorteilhafte Ausgestaltungen der Erfindung.

Erfindungsgemäß umfasst die Hebebühne für zweispurige Fahrzeuge mindestens ein linksseitiges und ein rechtsseitiges Tragelement zur jeweiligen Aufnahme mindestens eines Fahrzeugrads, und zumindest ein Hubelement zum Anheben und Absenken der Tragelemente. Weiterhin umfasst die erfindungsgemäße Hebebühne mindestens einen Linearaktuator zur Achsspielprüfung, der als Querverbindung zwischen den Tragelementen ausgebildet ist und mit diesen endseitig in Verbindung steht, zum Aufbringen einer Querkraftkomponente auf die Fahrzeugräder einer Fahrzeugsachse über das Trageelement durch die Bewegung des Linearaktuators im wesentlichen in Querrichtung des Fahrzeugs. Vorzugsweise steht der Linearaktuator direkt mechanisch mit den Tragelementen in Verbindung.

Durch die erfindungsgemäße Anordnung des Linearaktuators zwischen den Tragelementen anstatt unterhalb bzw. im Inneren eines Tragelements kann das Tragelement mit einer geringeren Bauhöhe realisiert werden. Durch Auslagerung des Linearaktuators aus dem Tragelement können größere Linearaktuatoren verwendet werden. Dies ist beispielsweise besonders vorteilhaft bei pneumatischen Linearaktuatoren, wo größere Zylinder eingesetzt werden können.

Das freiliegende, leicht zugängliche Hubelement kann zudem schnell und betriebssicher gewartet werden. Die beiden Tragelemente einer Hebebühne sind üblicherweise durch eine Querverstrebung zur Stabilisierung verbunden. Vorzugsweise wird in der erfindungsgemäßen Hebebühne eine derartige Querverbindung durch den Linearaktuator ersetzt. Dies hat den Vorteil, dass auf eine zusätzliche stabilisierende Querverbindung verzichtet werden kann. Weiterhin können leichte Verspannungen der Hebebühne bzw. Verschiebungen der Tragflächen zueinander durch Aufbringen einer Gegenkraft mittels des Linearaktuators besser im Vergleich zu einer fixen Querverbindung korrigiert werden.

Vorzugsweise ist die erfindungsgemäße Hebebühne eine Hebebühne, deren Tragelemente als zwei längs gerichtete Fahrschienen zur Fahrzeugaufnahme ausgebildet sind, und deren Linearaktuator in einem Endbereich der Fahrschienen, der um höchstens ein Drittel der Fahrschienenlänge von einem Schienenende entfernt ist, mit diesen in Verbindung steht. Vorzugsweise steht der Linearaktuator direkt mechanisch mit den Fahrschienen in Verbindung. Weiterhin umfasst das Hubelement dieser Hebebühne vorzugsweise einen Hubzylinder pro Fahrschiene mit je einer mit den Fahrschienen in einer Wirkverbindung stehenden Kolbenstange, wobei die Fahrschienen bei Bewegung des Linearaktuators eine Schwenkbewegung in einer horizontalen Ebene ausführen. Besonders vorteilhaft ist, wenn die Schwenkbewegung in der horizontalen Ebene eine leichte Drehbewegung um die Längsachse der jeweiligen Kolbenstange des Hubzylinders ist. Zur Erhöhung des Drehmoments um die Kolbenstange befindet sich daher der Linearaktuator vorzugsweise entweder am vorderen oder am hinteren Ende der Fahrschiene bzgl. des aufliegenden Fahrzeugs. Eine derartige Hebebühne kann eine Zweisäulenhebebühne oder eine Zweistempel-Unterflurhebebühne sein.

Die aus der einschlägigen Technik bekannten Zweisäulenhebebühne oder eine Zweistempel-Unterflurhebebühne mit einem Hubzylinder pro Fahrschiene umfassen konstruktive Mittel wie beispielsweise eine stabilisierende Querstange zwischen den Fahrschienen um eine Drehbewegung der Fahrschienen um die Hubzylinderlängsachse zu vermeiden, da eine solche Bewegung der Fahrschienen als störend erachtet wird. Durch die erfindungsgemäße Achsspielprüfvorrichtung, die einen Hubzylinder aufweist, der als Querverbindung zwischen den Fahrschienen ausgebildet ist, wird ein Spiel um die Längsachse der Hubzylinder dagegen in kontrollierte Weise für eine Drehbewegung der Fahrschienen um die Hubzylinderachse genutzt. Dabei wird eine Querkraftkomponente auf die Fahrzeugräder einer Fahrzeugsachse über das Trageelement durch die Bewegung des Linearaktuators in Querrichtung des Fahrzeugs aufgebracht. Dies hat den Vorteil, dass im Vergleich zu hydraulischen Antriebselementen, die unter den Tragelementen angebracht werden, über die Drehbewegung der Fahrschienen ein hohes Drehmoment erzeugt und dadurch das Achsspiel genauer und zuverlässiger ermittelt werden kann und zugleich eine kostengünstigere Konstruktion der Hebebühne ermöglicht wird.

Die erfindungsgemäße Anbringung des Linearaktuators kombiniert daher die Vorteile eines hebelstarken Antriebselements zur Achsspielprüfung und die Vorteile einer stabilisierenden Querverbindung zur Fixierung der Fahrschienen in Ruhestellung des Linearaktuators in einer Komponente.

Die erfindungsgemäße Unterflurhebebühne kann zwei Linearaktuatoren zur Achsspielprüfung aufweisen, wobei die Linearaktuatoren mit gegenüberliegenden Endbereichen der Fahrschienen in Verbindung stehen. Mit anderen Worten sind die Linearaktuatoren am vorderen bzw. am hinteren Ende der Fahrschiene bzgl. des aufliegenden Fahrzeugs angebracht. Dadurch kann zuverlässig das Achsspiel der vorderen und der hinteren Fahrzeugsachse geprüft werden.

Um die Hebelwirkung der Linearaktuatoren über die Fahrschienen zu maximieren, erfolgt die Bewegung der zwei Linearaktuatoren zueinander vorzugsweise gegenläufig. Dies stellt zudem eine abgestimmte Bewegung der Linearaktuatoren zueinander sicher und ermöglicht eine gleichmäßige, bei jedem Testvorgang reproduzierbare Kraftübertragung auf die Fahrzeugachsen. Weiterhin kann die erfindungsgemäße Hebebühne derart eingerichtet sein, dass die Bewegung des Achsspielprüfers von einer Steuerung derart gesteuert wird, das verschiedene vorbestimmte Bewegungsabläufe des Linearaktuators, beispielsweise verschiedene "Rüttelprogramme", ausgeführt werden.

Erfindungsgemäß können eine oder beide Tragelemente der Hebebühne auch als Schiebeplatten ausgebildet sein, die auf den längs gerichteten Fahrschienen zumindest in Querrichtung des Fahrzeugs beweglich gelagert angebracht sind. Unter Querrichtung des Fahrzeugs soll hier eine Richtung quer zur Längsachse bzw. quer zur Fahrtrichtung des Fahrzeugs verstanden sein. Die Schiebeplatte kann entweder nur in Querrichtung gelagert sein oder in Quer- und Längsrichtung. Die in Querrichtung beweglich gelagerte Schiebeplatte überträgt eine Querkraftkomponente des Linearaktuators auf die Fahrzeugräder einer Fahrzeugsachse. Eine zusätzlich in Längsrichtung beweglich gelagerte Schiebeplatte kann eine Längskraftkomponente auf die Fahrzeugräder einer Fahrzeugsachse mittels eines weiteren hydraulischen Antriebselements, das unter der Schiebeplatte angeordnet ist, übertragen.
Falls beide Tragelemente der Hebebühne als Schiebeplatten ausgebildet sind, können zwei Linearaktuatoren zur Achsspielprüfung verwendet werden, wobei die Linearaktuatoren mit gegenüberliegenden Endbereichen der Schiebeplatten in Verbindung stehen. Alternativ kann auch nur ein Linearaktuator zum Einsatz kommen. In diesem Fall sind die Schiebeplatten in einem Endbereich zusätzlich über ein nicht aktiv aus- oder einfahrbares Verbindungselement verbunden. Weiterhin können die Schiebeplatten in einem Endbereich über ein Drehgelenk mit der Fahrschiene verbunden sein.

Alternativ kann eines der beiden Tragelemente als eine Fahrschiene und ein Tragelement als eine beweglich gelagerte Schiebeplatte ausgebildet sein. Der Achsspieltester kann dann als zwei Linearaktuatoren bestehen, die jeweils mit einer Schiebeplatte und einer gegenüberliegenden Fahrschiene in Verbindung. Vorteilhafterweise sind die Linearaktuatoren an unterschiedlichen Enden der Fahrschiene bzw. der Schiebeplatte befestigt. Alternativ kann der Achsspieltester auch als ein Linearaktuator ausgebildet sind, wobei die Fahrschiene und die Schiebeplatte in einem Endbereich zusätzlich über ein nicht aktiv aus- oder einfahrbares Verbindungselement verbunden sind. In diesen Endbereich ist die Fahrschiene und/oder die Schiebeplatte leicht drehbar in horizontaler Richtung gelagert. Eine Bewegung des Linearaktuators führt dann zur einer Schwenkbewegung der Fahrschiene und/ oder der Schiebeplatte die ein Drehmoment auf die Fahrzeugachse überträgt.

Ein weiterer Vorteil von beweglich gelagerten Schiebeplatten in Quer- oder Längsrichtung ist, dass hierdurch Verspannungen beim Aufstellen des Fahrzeugs durch Bewegungen in Quer- und Längsrichtung zuverlässig beseitigt werden können, indem die Schiebeplatte ein im Wesentlichen nahezu spannungsfreies Aufnehmen von Fahrzeugrädern mit einer Trägereinheit ermöglichen. Falls die Beweglichkeit der Schiebeplatten dann nicht für eine weitere Achsspielprüfung benötigt werden, können die Schiebeplatten mittels eines Arretiersystems fixiert werden.

Die Hebebühne kann zwei linksseitige und zwei rechtsseitige Schiebeplatten umfassen, sowie zwei Linearaktuatoren zur Achsspielprüfung, wobei sich die zwei Achsprüfelemente bestehend aus jeweils einem Linearaktuator, einer linkseitigen und einer rechtsseitigen Schiebeplatte in unterschiedlichen Endbereichen der Fahrschienen befinden, die um höchstens ein Drittel der Fahrschienenlänge von einem Schienenende entfernt sind. Mit anderen Worten befindet sich ein Achsprüfelement in einem Endbereich der Fahrschiene nahe dem vorderen Fahrzeugende und ein Achsprüfelement in einem Endbereichen der Fahrschiene nahe dem hinteren Fahrzeugende.

Zur Erhöhung der Querkraft erfolgt vorzugsweise bei der erfindungsgemäßen Hebebühne mit Schiebeplatten und zwei Linearaktuatoren die Bewegung der zwei Linearaktuatoren zueinander gegenläufig.

Die erfindungsgemäße Achsspielprüfvorrichtung mit Schiebeplatten wird vorzugsweise in Kombination mit einer Scherenhebebühne oder einer Viersäulenhebebühne eingesetzt. Das Nachrüsten von gängigen Scheren- oder einer Viersäulenhebebühne mit einer aus der einschlägigen Technik bekannten Achsspielprüfvorrichtung ist in der Regel sehr kostenaufwendig, da gewöhnlich keine ausreichend hohe bzw. keine entsprechend große Tiefenabmessung der Fahrschienen gegeben ist, um die Antriebselemente, die unter einer Schiebeplatte angebracht sind, einzubauen. Weiterhin erfordert die Notwendigkeit, die Versorgungsleitungen und elektrischen Steuerleitungen innerhalb der Fahrschienen zwischen dem Druck erzeugenden Aggregat und den Schiebeplatten, die jeweils einem Rad der geprüften Achse zugeordnet sind, anzubringen einen zusätzlichen Kostenmehraufwand für Installation und Montagematerial. Der erfindungsgemäße Linearaktuator zwischen den Fahrschienen ermöglicht dagegen eine vergleichsweise kostengünstige und schnelle Nachrüstung. Zudem ist der frei zugängliche Linearaktuator leicht zu warten.

Der erfindungsgemäße Linearaktuator kann als ein Hydraulikzylinder ausgebildet sein. Alternativ kann der Linearaktuator auch mit einem pneumatischen Antrieb versehen sein, d.h. als ein Pneumatikzylinder ausgebildet sein. Für eine besonders kostengünstige Ausführung kann der Linearaktuator auch als Handhebelsystem ausgebildet sein. Der erfindungsgemäß angeordnete Linearaktuator kann ein wechselwirkender Linearaktuator sein, d.h. ein Linearaktuator der aktiv ein- und ausfahren kann, oder ein einfacher Linearaktuator, der aktiv entweder nur ein- oder ausfahren kann. Beispielsweise können zwei einfache Linearaktuatoren zum Einsatz kommen, deren Bewegung zueinander gegenläufig erfolgt, und wobei die Linearaktuatoren derart eingerichtet sind, dass der eine aktiv einfahren und der andere aktiv ausfahren kann.

Weiterhin kann eine Hebebühne mit der erfindungsgemäßen Achsspielprüfvorrichtung realisiert werden, bei der die linksseitigen und die rechtsseitigen gegenüberliegenden Tragelemente in leicht unterschiedlicher vertikaler Hubhöhe positioniert werden können. Die aus der einschlägigen Technik bekannten Hebebühnen sind derart eingerichtet, dass die vertikale Hubhöhe einer Fahrschiene oder der Fahrzeugauflager gleich ist, um eine stabile waagrechte Hubposition des Fahrzeugs sicherzustellen. Hebebühnensteuerungen sind daher derart eingerichtet, dass eine unterschiedliche vertikale Hubhöhe der Tragelemente vermieden wird.

Die Erfinder haben bei der Entwicklung der erfindungsgemäßen Hebebühne mit Achsspieltestvorrichtung den sehr positiven Effekt beobachtet, dass eine leicht unterschiedliche vertikale Hubhöhe der Tragelemente, beispielsweise der Fahrschienen, besonders vorteilhaft ist um das Fahrzeug auf ein etwaig vorhandenes Achsspiel zu testen, da die vertikale Verschiebung eine vertikale Kraftkomponente in Richtung der Längsachse des Hubelements auf die Fahrzeugräder einer Fahrzeugsachse überträgt, und damit eine unterschiedliche Prüfkraft im Vergleich zu den Schiebekräften einer ebenen Platte oder Fahrschiene erzeugt und damit eine genauere Achsspielprüfung ermöglicht.

Eine Achsspielprüfung mittels vertikal unterschiedlich positionierter Hubelemente bzw. Tragelemente erfordert vorteilhafterweise keine zusätzlichen konstruktiv aufwendigen und teuren Prüfelemente an der Hebebühne. Eine derartige Prüfvorrichtung kann in der Regel durch Anpassung der Hebebühnen-Steuerung realisiert werden.

Die Achsspielprüfung mittels vertikal unterschiedlich positionierter Hubelemente bzw. Tragelemente ist nicht auf eine erfindungsgemäße Hebebühne mit mindestens einem Linearaktuator, der als Querverbindung zwischen den Tragelementen ausgebildet ist und mit diesen endseitig in Verbindung steht, beschränkt. Jedoch ist die Kombination mit dem erfindungsgemäßen Linearaktuator besonders vorteilhaft. Im Gegensatz zu starren Querverbindungen zur Stabilisierung der Tragelemente kann der Linearaktuator beim Einstellen einer leicht unterschiedlichen vertikalen Hubposition der Trageelemente etwas ausgefahren werden und dadurch die notwendige Flexibilität bei gleichzeitiger Stabilität zu gewährleisten.

Zusammenfassend wird das vorhandene Achsspiel um einen zylinderförmigen Hubstempel ausgenutzt, um mit mindestens einem Linearaktuator zur Achsspielprüfung, der als Querverbindung zwischen den Tragelementen der Hebebühne ausgebildet ist eine Querkraftkomponente auf die Fahrzeugräder einer Fahrzeugsachse aufzubringen. Während bekannte Hebebühnenkonstruktionen dieses Achsspiel gerade zu vermeiden versuchen, beispielsweise durch Verwendung eines Vier-Kant-Hubstempels oder durch zusätzliche stabilisierende Querverbindungen zwischen den Fahrschienen, nutzt die vorliegende Erfindung dieses Achsspiel für eine besonders vorteilhafte Achsspielprüfvorrichtung.

Der Linearaktuator kann wahlweise als Achsspielprüfvorrichtung im Achsspielprüfbetrieb genutzt werden, oder außerhalb des Achsspielprüfbetriebs als formsteifes Verbindungselement, um die parallele Ausrichtung der beiden Fahrschienen zu gewährleisten. Damit ist eine flache Konstruktion der Fahrschienen möglich, da keine Antriebsaggregate zur Achsspielprüfung im Innenraum der Fahrschienen untergebracht werden müssen. Durch die flache Bauchweise wird der Achsspieltester eben befahrbar und es sind keine Hebevorrichtungen erforderlich, die extra eingebaut werden müssten (z.B. Luftkissen-Hebeschwelle).

Durch Auslagerung des Achsspielbewegungselements aus der Fahrschiene können größere Zylinder verwendet werden. Weiterhin wird ein hohes Drehmoment durch Übertragung der Querkraft an die Fahrschienen und die Drehbewegung um die vertikale Hubachse ermöglicht, und ermöglicht eine präzise und zuverlässige Achsspielmessung. Die Auslagerung des Achsspielbewegungselements ermöglicht weiterhin eine einfache und betriebssichere Wartung des Achsspieltesters. Der Achsspieltester mit Schiebeplatten kann zudem einfach bei Viersäulen, Vierstemple- oder Scherenhebebühnen nachgerüstet werden.

Bevorzugte Ausführungsformen der vorliegenden Erfindung werden im Folgenden unter Bezugnahme auf die beigefügten Zeichnungen näher beschrieben.
Fig. 1 zeigt eine perspektivische schematische Ansicht einer Zwei- Stempel-Unterflur-Hebebühne gemäß einem Ausführungsbeispiel der vorliegenden Erfindung;
Fig. 2A, 2B und 2C zeigen schematisch eine Draufsicht auf eine Zwei-Stempel-Unterflur-Hebebühne mit 2 Hydraulik-Zylindern zur Achsspielprüfung gemäß einem Ausführungsbeispiel der vorliegenden Erfindung;
Fig. 3 zeigt schematisch eine Draufsicht auf eine Vier-Stempel-Unterflur-Hebebühne mit Schiebeplatten und einem Hydraulik-Zylinder zur Achsspielprüfung gemäß einem Ausführungsbeispiel der vorliegenden Erfindung;
Fig. 4 zeigt schematisch eine Seitenansicht auf eine Stempel-Unterflur-Hebebühne mit vertikal unterschiedlich positionierten Fahrflächen zur Achsspielprüfung gemäß einem Ausführungsbeispiel der vorliegenden Erfindung.

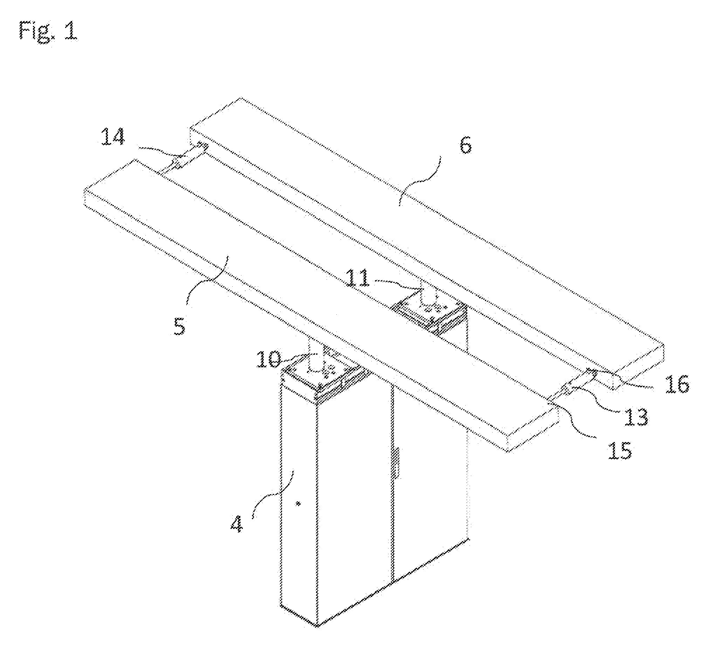

Fig. 1 zeigt eine perspektivische schematische Ansicht einer Zweistempel-Unterflur-Hebebühne gemäß einem Ausführungsbeispiel der vorliegenden Erfindung. Die Hebebühne weist zwei zueinander parallele Fahrschienen 5, 6 auf. Die Fahrschienen 5, 6 sind mittig auf jeweils einem Stempel 10, 11 abgestützt und werden von den Hubstempeln 10,11 in vertikaler Richtung angehoben bzw. abgesenkt.

Die dargestellte Zweistempel-Hebebühne ist in einer Bodeneinsenkung (nicht gezeigt) montiert, die eine ausreichende Tiefe zur Aufnahme der der Kassette 4 hat, in welcher die Zylinder für die beiden Hubstempel 10, 11 sowie die Antriebsaggregate, Druckmittelleitungen sowie ein Teil der Steuerung untergebracht sind.

An den vorderen und hinteren Enden der beiden Fahrschienen 5 und 6 ist jeweils ein als Hydraulikzylinder 13 bzw. 14 ausgebildetes Verbindungselement angebracht, der an den zueinander zugewandten Innenseiten der Fahrschienen 5 und 6 über Befestigungsmittel 15, 16 befestigt ist. Die Hydraulikzylinder 13, 14 werden im Folgenden auch als Achsspieltester bezeichnet. Falls keine Achsspielprüfung vorgenommen wird, wird die parallele Ausrichtung der beiden Fahrschienen 5, 6 durch die Pneumatikzylinder gewährleistet, deren ausfahrbarer Kolben dann fixiert ist.

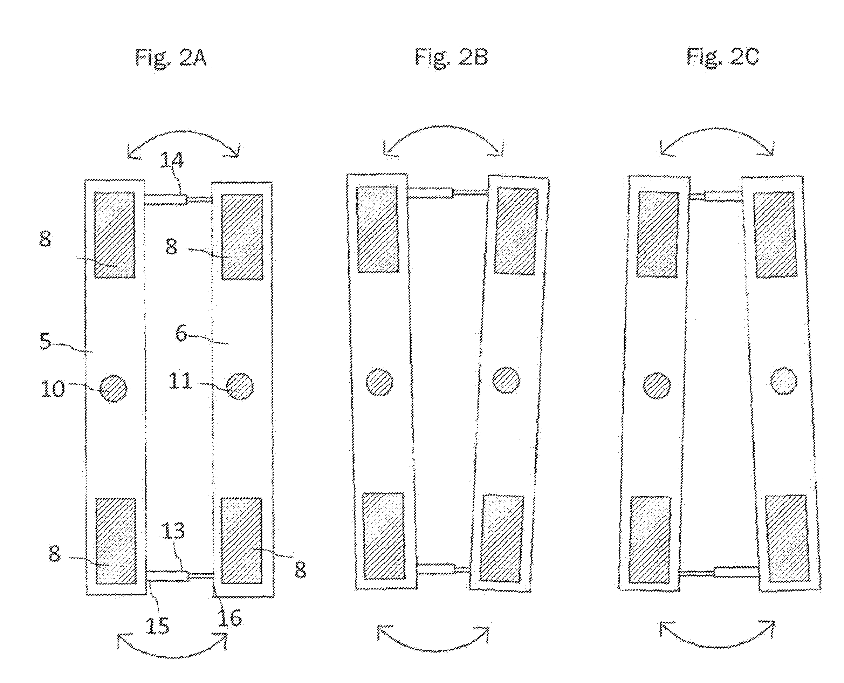

Die erfindungsgemäße Verwendung des Achsspieltesters 13 zur Achsspielprüfung ist in den schematischen Figuren 2A, 2B und 2C beispielhaft illustriert. Fig. 2A zeigt schematisch eine Draufsicht auf eine Zwei-Stempel-Unterflur-Hebebühne mit zwei Hydraulik-Zylindern zur Achsspielprüfung gemäß einem Ausführungsbeispiel der vorliegenden Erfindung. Die Hebebühne weist zwei zueinander parallele Fahrschienen 5, 6 auf. Auf der Oberseite der beiden Fahrschienen 5, 6 befinden sich Aufstandselemente 8 für die Räder eines - nicht dargestellten - Fahrzeugs. An der Unterseite der Fahrschienen 5 und 6 ist jeweils eine zylinder-förmige Kolbenstange 10, 11 eines Hydraulikzylinders zum Anheben und Absenken der Fahrschienen befestigt. Die beiden Fahrschienen sind um die Kolbenstangen 10, 11 leicht drehbar gelagert.

An den vorderen und hinteren Enden der beiden Fahrschienen 5 und 6 ist jeweils ein als Hydraulikzylinder 13 bzw. 14 ausgebildetes Verbindungselement angebracht, der an den zueinander zugewandten Innenseiten der Fahrschienen 5 und 6 über Befestigungsmittel 15, 16 befestigt ist.

Durch gegenläufiges Aus- und Einfahren der Hydraulikzylinder 13 und 14 wird ein Drehmoment auf die Fahrschienen 5 und 6 um die Hubsäulen 10, 11 erzeugt. Die gegenläufige Bewegung der Pneumatikzylinder 13 und 14, d.h. Einfahren des einen Zylinders bei gleichzeitigem Ausfahren des anderen Zylinders um die gleiche Distanz, erzeugt eine entgegengesetzte Drehbewegung der Fahrschienen 5 und 6 um die Hubsäulen 10, 11.

Eine Zylinderbewegung der Achsspieltester um ca. +/- 4 cm ist ausreichend, um eine leichte Drehbewegung der Fahrschienen 5 und 6 aus der Parallelstellung zu erzeugen, was wiederum bei einer Fahrschienenlänge von jeweils 4,40 m ein ausreichendes Drehmoment erzeugt, um über die Fahrschienen eine Kraftkomponente zur Achsspielprüfung auf die Fahrzeugräder einer Fahrzeugsachse zu übertragen.

Fig. 2A zeigt insbesondere die Stellung der Fahrschienen 5, 6 zu Beginn und am Ende der Achsspielprüfung in der die Fahrschienen parallel ausgerichtet sind. Hier wird die parallele Ausrichtung der beiden Fahrschienen 5, 6 durch den Pneumatikzylinder gewährleistet, dessen ausfahrbarer Kolben dann in einer zuvor kalibrierten Ruhestellung fixiert ist. Zur Verdeutlichung des Funktionsprinzips wurden die übrigen Bestandteile wie Pneumatikzylindersteuerung, Bedieneinheit der Pneumatikzylinder und dergleichen, die in üblicher Weise ausgeführt sind, nicht weiter dargestellt.

Fig. 2B und Fig. 2C illustrieren die durch die Pneumatikzylinder 13 und 14 erzeugte Drehbewegung der Fahrschienen um die Hubsäulen 10, 11. Die Bewegung der Pneumatikzylinder 13, 14 wird von einem KFZ-Prüfer mittels einer in eine Prüflampe integrierten Fernbedienung (nicht gezeigt) gestartet, die Steuersignale an eine Zylindersteuerung (nicht gezeigt) übermittelt. Die Bewegung der Pneumatikzylinder 13, 14 ist gegenläufig, d.h. wenn der Zylinder 13 einfährt, fährt der Zylinder 14 aus. Nachdem der Zylinder 13 seine maximale Einfahrposition bzw. der Zylinder 14 seine maximale Ausfahrposition erreicht hat, die ein Ausfahren des Zylinders um 4 cm entspricht (Fig. 2B), kehrt sich die Zylinderbewegung um bis der der Zylinder 13 seine maximale Ausfahrposition bzw. der Zylinder 14 seine maximale Einfahrposition erreicht hat (Fig. 2C). Diese gegenläufige Hin- und Herbewegung der Pneumatikzylinder 13, 14 erzeugt eine gegenläufige Drehbewegung der Fahrschienen 5, 6 um die Hubsäulen 10, 11 was durch die gekrümmten Pfeile illustriert ist. Mit anderen Worten entspricht einer Drehbewegung der Fahrschiene 5 im Uhrzeigersinn eine Drehbewegung der Fahrschiene 6 im Gegenuhrzeigersinn und umgekehrt. Diese gegenläufige Hin- und Herbewegung der Pneumatikzylinder 13, 14 überträgt eine Querkraftkomponente auf die Fahrzeugräder einer Fahrzeugsachse über die Fahrschienen 5, 6. Ein etwaiges Achsspiel bzw. Gelenkspiel wird dadurch für den Prüfer sichtbar gemacht, der das resultierende Achsspiel beobachtet.

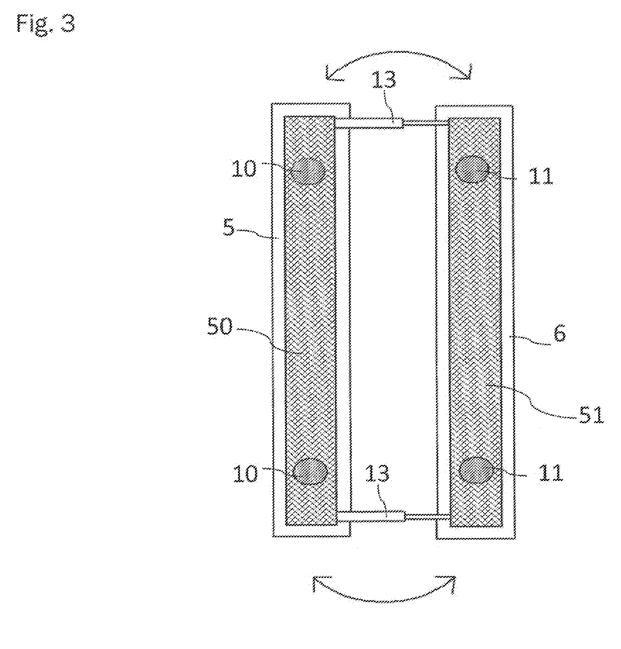

Fig. 3 zeigt schematisch eine Draufsicht auf eine Vier-Stempel-Unterflur-Hebebühne mit Schiebeplatten und einem Hydraulik-Zylinder zur Achsspielprüfung gemäß einem Ausführungsbeispiel der vorliegenden Erfindung. Die Vier-Stempel-Unterflur-Hebebühne weist zwei linkseitige Hubstempel 10 und zwei rechtsseitige Hubstempel 11 zum Anheben und Absenken der Hebebühne auf. Die Hebebühne weist weiterhin zwei zueinander parallele Fahrschienen 5, 6 auf. Die Hebebühne weist ferner auf der Oberseite jeder Fahrschiene 5, 6 eine Schiebeplatte 50, 51 zur Aufnahme der Räder eines - nicht dargestellten - Fahrzeugs auf. Die Schiebeplatten 50 und 51 sind in Querrichtung des Fahrzeugs auf den Fahrschienen 5, 6 über Kugellager (nicht gezeigt) beweglich gelagert angebracht und über eine senkrecht zur Längsachse der Fahrschienen 5, 6 ausfahrbare Kolben- und Zylinderanordnung 13 verbunden. Die Schiebeplatten 50 und 51 sind in ihren Endbereichen über einen Hydraulikzylinder zur Achsspielprüfung verbunden. Zur Achsspielprüfung erfolgt eine Translationsbewegung der Hydraulikzylinders 13, die eine Schiebekraft auf die Schiebeplatten 50, 51 ausübt. Dadurch werden die beweglich gelagerten Schiebeplatten senkrecht zur Längsachse der Fahrschienen 5, 6 verschoben, die dadurch eine Querkraftkomponente auf die aufstehenden Fahrzeugräder einer Fahrzeugsachse übertragen um ein etwaig vorhandenes Achsspiel sichtbar zu machen. Hierbei erfolgt die Bewegung der Hydraulikzylinder gegenläufig, die eine leichte Drehbewegung der Schiebeplatten 50, 51 um eine Drehachse erzeugt, die parallel zu der Achse der Hubstempeln 10,11 ist. Die Schiebeplatten 50, 51 werden mit einem Arretiermittel, z.B. einem Arretierstift, an den Schienenelementen arretiert, wenn keine Achsspielprüfung stattfindet.

Der Achsspielprüfmechanismus dieses Ausführungsbeispiels hat den Vorteil, dass er auch bei Viersäulen- und Scherenhebebühnen eingesetzt bzw. nachgerüstet werden kann.

Ein weiteres, nicht gezeigtes, Ausführungsbeispiel ist eine Hebebühne mit zwei längs gerichteten Fahrschienen zur Fahrzeugaufnahme und einem Linearaktuator zur Achsspielprüfung. Die Fahrschienen sind quer zur Auffahrrichtung des Fahrzeugs leicht beweglich auf Schienenelementen, beispielsweise mittels Kugellager, gelagert. Der Linearaktuator ist als Querverbindung zwischen den Fahrschienen ausgebildet und steht mit diesen endseitig in Verbindung. Hierbei wird über die Fahrschiene durch die Bewegung des Linearaktuators in Querrichtung des Fahrzeugs eine Querkraftkomponente auf die Fahrzeugräder einer Fahrzeugsachse aufgebracht. Eine derartige Bewegung des Linearaktuators bewirkt eine Schwenkbewegung der Fahrschienen in einer horizontalen Ebene der Fahrschienen, da die Fahrschienen leicht beweglich auf Schienenelementen, beispielsweise mittels Kugellager, gelagert sind und eine horizontale Schwenkbewegung um einige cm ausführen.

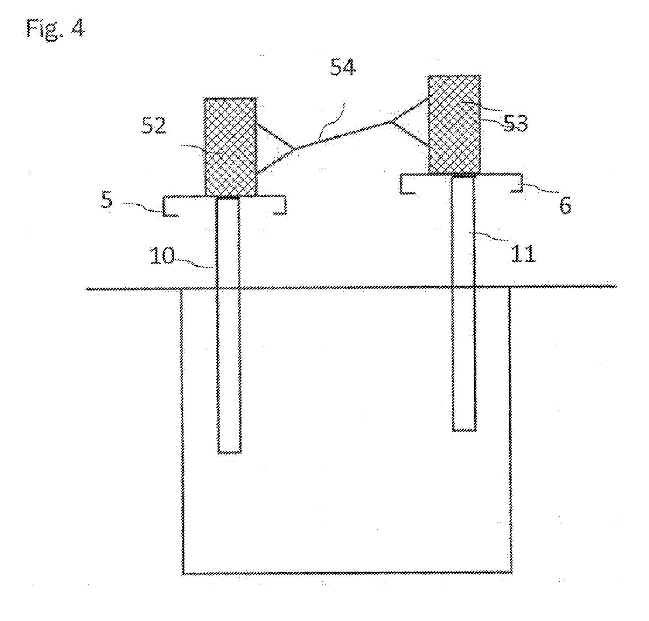

Fig. 4 zeigt schematisch eine Seitenansicht auf eine Stempel-Unterflur-Hebebühne mit vertikal unterschiedlich positionierten Fahrflächen zur Achsspielprüfung gemäß einem weiteren Ausführungsbeispiel der vorliegenden Erfindung.

In der in Fig. 4 beispielhaft illustrierten Hubvorrichtung besteht jede Antriebseinrichtung aus zwei in vertikaler Richtung wirkende Kolben- und Zylinderanordnungen 10 und 11 zum Anheben und Absenken der Tragelemente 5, 6. Die linkseitigen und rechtsseitigen gegenüberliegenden Hubkolben können zur Achsspielprüfung in leicht unterschiedlicher vertikaler Hubhöhe positioniert werden. Für eine Achsspielprüfung genügt beispielsweise eine Differenz von 4 cm in der vertikalen Hubhöhe der Fahrzeugschienen 5 und 6. Hierdurch resultiert eine Schiefstellung in vertikaler Richtung der aufliegenden Fahrzeugräder 52. Diese Schiefstellung überträgt sich auf die Fahrzeugachse 54 dieser Fahrzeugräder, wodurch ein etwaig vorhandenes Achsspiel sichtbar gemacht werden kann.

Die einzelnen Merkmale der Erfindung sind selbstverständlich nicht auf die beschriebenen Kombinationen von Merkmalen in Rahmen der vorgestellten Ausführungsbeispiele beschränkt und können in Abhängigkeit vorgegebener Vorrichtungskonfigurationen auch in anderen Kombinationen eingesetzt werden. So können beispielsweise insgesamt 4 Schiebeplatten an der vorderen und hinteren Fahrzeugachse eingesetzt werden oder nur jeweils eine Schiebeplatte auf der einen Seite in Verbindung mit einer nicht beweglichen Reifenaufstandsplatte auf der gegenüberliegenden Fahrschiene. Desweiteren kann die erfindungsgemäße Achsspielprüfvorrichtung mit einem unter einer Schiebeplatte angebrachten Hydraulik- oder Pneumatikaggregat kombiniert werden um eine zusätzliche Bewegung in Längsrichtung des Fahrzeugs zu erzeugen.

## Patentansprüche

1. Hebebühne für zweispurige Fahrzeuge mit
- mindestens einem linksseitigen (5) und einem rechtsseitigen (6) Tragelement zur jeweiligen Aufnahme eines Fahrzeugrads,
- zumindest einem Hubelement (10, 11) zum Anheben und Absenken der Tragelemente (5,6), und
- mindestens einem Linearaktuator (13) zur Achsspielprüfung, der als Querverbindung zwischen den Tragelementen (5, 6) ausgebildet ist und mit diesen endseitig in Verbindung steht zum Aufbringen einer Querkraftkomponente auf die Fahrzeugräder einer Fahrzeugsachse über das Trageelement durch die Bewegung des Linearaktuators (13) in Querrichtung des Fahrzeugs.

2. Hebebühne nach Anspruch 1, wobei die Tragelemente als zwei längs gerichtete Fahrschienen (5, 6) zur Fahrzeugaufnahme ausgebildet sind, der Linearaktuator in einem Endbereich der Fahrschienen, der um höchstens ein Drittel der Fahrschienenlänge von einem Schienenende entfernt ist, mit diesen in Verbindung steht, das Hubelement (10, 11) einen Hubzylinder pro Fahrschiene mit je einer mit den Fahrschienen (5, 6) in einer Wirkverbindung stehenden Kolbenstange (17) umfasst, und die Fahrschienen (5, 6) bei Bewegung des Linearaktuators (13) eine Schwenkbewegung in einer horizontalen Ebene ausführen.

3. Hebebühne nach Anspruch 2, wobei die Schwenkbewegung in einer horizontalen Ebene eine leichte Drehbewegung um die Längsache der jeweiligen Kolbenstange (17) ist.

4. Hebebühne nach Anspruch 2 oder 3, wobei die Hebebühne zwei Linearaktuatoren (13, 14) zur Achsspielprüfung umfasst, wobei die Linearaktuatoren (13, 14) mit gegenüberliegenden Endbereichen (15,16) der Fahrschienen (5, 6) in Verbindung stehen.

5. Hebebühne nach Anspruch 4, wobei die Bewegung der zwei Linearaktuatoren (13, 14) zueinander gegenläufig erfolgt, so dass die Drehbewegung der zwei Fahrschienen um die Kolbenstangen (17) entgegengesetzt ist.

6. Hebebühne nach Anspruch 1, wobei die Tragelemente als Schiebeplatten (50, 51) ausgebildet sind, die auf den längs gerichteten Fahrschienen (5, 6) zumindest in Querrichtung des Fahrzeugs beweglich gelagert angebracht sind.

7. Hebebühne nach Anspruch 6, wobei die Hebebühne zwei linksseitige (50) und zwei rechtsseitige (51) Schiebeplatten aufweist, und zwei Linearaktuatoren (13, 14) zur Achsspielprüfung umfasst, wobei sich die zwei Achsprüfelemente bestehend aus jeweils einem Linearaktuator, einer linkseitigen und einer rechtsseitigen Schiebeplatte in unterschiedlichen Endbereichen der Fahrschienen befinden, die um höchstens ein Drittel der Fahrschienenlänge von einem Schienenende entfernt sind.

8. Hebebühne nach Anspruch 7, wobei die Bewegung der zwei Linearaktuatoren zueinander gegenläufig erfolgt.

9. Hebebühne nach zumindest einem der Ansprüche 6 - 8, wobei die Hebebühne eine Viersäulenhebebühne oder eine Vierstempel-Unterflurhebebühne oder eine Scherenhebebühne ist.

10. Hebebühne nach Anspruch 1, wobei ein Tragelement als eine längs gerichtete Fahrschiene ohne Schiebeplatte ausgebildet ist und ein Tragelement als Schiebeplatte ausgebildet ist, wobei die Schiebeplatte auf einer längs gerichteten Fahrschienen zumindest in Querrichtung des Fahrzeugs beweglich gelagert angebracht ist.

11. Hebebühne nach zumindest einem der Ansprüche 1-10, wobei die linksseitige und die rechtsseitigen gegenüberliegenden Tragelemente (5, 6) in leicht unterschiedlicher vertikaler Hubhöhe positioniert werden können.
